# EUROPEAN PATENT SPECIFICATION

(11) **EP 3 240 097 B1**
(45) Date of publication and mention of the grant of the patent: **01.08.2018**
(21) Application number: 15872181.1
(22) Date of filing: 09.12.2015
(51) Int. Cl.: H01M 10/48, H02J 7/00, H02J 7/04, H02J 7/10

(54) **BATTERY PACK**
BATTERIEPACK
BLOC-BATTERIE

(30) Priority: 25.12.2014 JP 2014262576
(43) Date of publication of application: 01.11.2017
(73) Proprietor: Sanyo Electric Co., Ltd., Osaka 574-8534 (JP)
(72) Inventor: NAKAYAMA, Masato, Osaka-shi Osaka 540-6207 (JP); KANNO, Junji, Osaka-shi Osaka 540-6207 (JP); SEKI, Masahiro, Osaka-shi Osaka 540-6207 (JP)
(74) Representative: Grünecker Patent- und Rechtsanwälte PartG mbB
(86) International application number: PCT/JP2015/006128
(87) International publication number: WO 2016/103606

(56) References cited:
- EP-A1- 2 528 189
- WO-A1-2014/141809
- JP-A- 2009 044 823
- JP-A- 2009 117 262
- JP-A- 2012 501 061
- US-A1- 2005 206 347
- US-A1- 2007 018 780

## Description

### TECHNICAL FIELD

The present invention relates to a battery pack that detects a battery temperature by a temperature sensor, and in particular to a battery pack including a plurality of temperature sensors.

### BACKGROUND ART

A battery pack includes a temperature sensor that detects a battery temperature in order to charge and discharge a battery while protecting the battery. This battery pack detects a temperature of a battery, controls a charging/discharging current of the battery, or corrects charging/discharging efficiency varying depending on temperatures to accurately calculate the remaining capacity. This battery pack can protect the battery by cutting off the charging/discharging current when, for example, the temperature of the battery is higher than the highest temperature in a predetermined temperature range. The battery pack has a temperature terminal for outputting a signal of the detected temperature to a main body device to which the battery pack is set. To the temperature terminal, a temperature sensor such as a thermistor is connected. The temperature terminal outputs the temperature of the battery to the main body device. In the battery pack, a temperature sensor is disposed in a region in which the temperature is the highest, and this temperature sensor is coupled to one temperature terminal. Thus, the detected battery temperature can be output to the main body device by a simple circuit-configuration. Note here that this battery pack can detect a temperature of a battery provided with a temperature sensor and output the detected temperature to the main body device, but it cannot detect a temperature of another battery and cannot output the temperature terminal to the main body device. In a battery pack incorporating a plurality of batteries, all the battery temperatures cannot be equalized. Therefore, development of a battery pack incorporating a plurality of batteries, which includes a plurality of temperature sensors that detect a temperature of each battery, has been carried out (see Patent Literatures 1 and 2).

A battery pack of Patent Literature 1 includes a plurality of temperature sensors disposed near a plurality of batteries and connected in series to a temperature terminal. This battery pack can output temperature signals of the plurality of temperature sensors from one temperature terminal. However, since this battery pack detects a temperature from total serial resistance of all the temperature sensors connected in series, even when an electrical resistance value of a specific temperature sensor is changed, a change of the total serial resistance is small, this battery pack cannot accurately detect a change in the temperature of a battery. Furthermore, even when a detected temperature is increased and the electrical resistance value is reduced in a specific temperature sensor, when a detected temperature is reduced and the electrical resistance value is increased in another temperature sensor, the change in the total serial resistance is reduced. Consequently, a detected temperature of each temperature sensor cannot be determined accurately.

A battery pack of Patent Literature 2 is provided with a plurality of temperature sensors, and the temperature sensors are coupled to individual temperature terminals, respectively. Therefore, the number of temperature terminals is increased, and a circuit-configuration becomes complicated.

Furthermore, a battery pack provided with one temperature terminal and outputting two temperature signals has been developed (see, Patent Literature 3).

US 2005/0206347 discloses a temperature sensor for

### Citation List

### Patent Literature

PTL 1: Japanese Patent Application Unexamined Publication No. 2002-75465
PTL 2: Japanese Patent Application Unexamined Publication No. 2005-129359
PTL 3: Japanese Patent Application Unexamined Publication No. 2009-44823

### SUMMARY OF THE INVENTION

### Technical Problem

A battery pack of PTL 3 includes a main temperature sensor and a sub temperature sensor. The main temperature sensor is coupled to a temperature terminal. Therefore, usually, a temperature signal of the main temperature sensor is output from the temperature terminal. Furthermore, this battery pack includes a temperature switch connected between the temperature terminal and an earth line. The temperature switch is controlled by detected temperatures of the sub temperature sensor and turned ON and OFF. This battery pack outputs a temperature signal of the main temperature sensor from the temperature terminal when the temperature switch is in an OFF state. When the sub temperature sensor detects an abnormal temperature, a temperature monitoring circuit turns the temperature switch from an OFF state to an ON state, but when the temperature switch is turned to an ON state, the temperature terminal is short-circuited to the earth line, and an output impedance becomes substantially 0 Ω. Therefore, a main body device to which the battery pack is connected detects short-circuit of the temperature terminal, and can determine that the sub temperature sensor detects an abnormal temperature.

The above-mentioned battery pack can output an ordinary normal temperature signal and an abnormal temperature signal from one temperature terminal. However, in this battery pack, when the sub temperature sensor detects an abnormal temperature, the temperature terminal is short-circuited to the earth line. Therefore, when a voltage is applied to the temperature terminal for some reasons, a large short-circuit current flows. Furthermore, when the temperature terminal is short-circuited to the earth line, since the output impedance becomes substantially 0 Ω, an electric current value of the circuit for detecting an abnormal temperature becomes large.

The present invention has been made for the purpose of solving the above problems. An important object of the present invention is to provide a battery pack capable of outputting a plurality of temperature signals from one temperature terminal with a simple circuit-configuration, and capable of outputting a plurality of temperature signals safely.

### Solution to Problem

A battery pack of the present invention includes a plurality of batteries 1; and includes main temperature sensor 2 that detects temperatures of batteries 1; temperature terminal 12 coupled to main temperature sensor 2; sub temperature sensor 3 that detects temperatures of battery packs 100 and 200, at a position different from that of main temperature sensor 2; main switch 4 connected between main temperature sensor 2 and temperature terminal 12, and, in an ON state, outputting a signal of main temperature sensor 2 to temperature terminal 12 and, in an OFF state, disconnecting main temperature sensor 2 from temperature terminal 12; and temperature monitoring circuit 5 that performs control so that main switch 4 is turned ON and OFF depending on a detected temperature of sub temperature sensor 3. Temperature monitoring circuit 5 compares the detected temperature detected by sub temperature sensor 3 with a predetermined temperature range, performs control so that main switch 4 is turned to an OFF state when the detected temperature is higher or lower than the predetermined temperature range, and outputs an abnormal signal from temperature terminal 12 .

The battery pack of the present invention includes resistor circuit 7 having a first end connected between temperature terminal 12 and main switch 4. Resistor circuit 7 includes sub-switch 8 and resistor 9. Resistor 9 has a resistance value out of a range of possible resistance values taken by main temperature sensor 2 depending on a temperature change. In an OFF state of main switch 4, temperature monitoring circuit 5 can turn sub-switch 8 of resistor circuit 7 to an ON state, and an output signal of temperature terminal 12 is the electrical resistance value of resistor 9.

The battery pack of the present invention includes first resistor circuit 7A and second resistor circuit 7B having different electrical resistance values of resistors 9 and each having a sub-switch. In an OFF state of main switch 4, temperature monitoring circuit 5 can turn sub-switch 8 of any one of first resistor circuit 7A and second resistor circuit 7B to an ON state, and an output signal of temperature terminal 12 can be the resistance value of resistor 9 of first or second resistor circuit that has been turned to an ON state.

In the battery pack of the present invention, temperature monitoring circuit 5 compares the detected temperature of sub temperature sensor 3 with the predetermined temperature range, and turns main switch 4 to an OFF state when the detected temperature is higher than the predetermined temperature range and turns sub-switch 8 of first resistor circuit 7A to an ON state; turns main switch 4 to an OFF state when the detected temperature is lower than the predetermined temperature range and turns sub-switch 8 of first resistor circuit 7B to an ON state; and changes an output signal of temperature terminal 12, and outputs a signal from temperature terminal 12, indicating that the detected temperature of sub temperature sensor 3 is higher or lower than the predetermined temperature range.

The battery pack of the present invention includes a plurality of sub temperature sensors 3. Temperature monitoring circuit 5 can compare a plurality of the detected temperatures detected by the plurality of sub temperature sensors 3 with the predetermined temperature range; perform control so that main switch 4 is turned to an OFF state when any one of the plurality of the detected temperatures is higher or lower than the predetermined temperature range, and output an abnormal signal from temperature terminal 12.

The battery pack of the present invention includes a plurality of sub temperature sensors 3 and a plurality of resistor circuits 7. The plurality of resistor circuits 7 can include resistors 9 having different resistance values for each connected sub temperature sensor 3.

In the battery pack of the present invention, temperature monitoring circuit 5 includes comparator 6, and comparator 6 can compare a detected voltage input from sub temperature sensor 3 with the reference voltage and compare the detected temperature with the predetermined temperature range.

In the battery pack of the present invention, main temperature sensor 2 can detect a temperature of battery 1 having the highest temperature among the plurality of batteries 1 in a usual state, and sub temperature sensor 3 can detect a temperature of battery 1 that is distant from main temperature sensor 4.

In the battery pack of the present invention, sub temperature sensor 3 can detect temperatures of circuit components.

### Advantageous Effects of the Invention

A battery pack of the present invention can safely output a plurality of temperature signals from one temperature terminal with a simple circuit-configuration. This is achieved because in the battery pack of the present invention, a temperature monitoring circuit compares a detected temperature of a sub temperature sensor with a predetermined temperature range, turns a main switch to an OFF state when the detected temperature is higher or lower than the predetermined temperature range, and outputs an abnormal signal from the temperature terminal.

### BRIEF DESCRIPTION OF THE DRAWINGS

FIG. 1 is a circuit diagram of a battery pack in accordance with one exemplary embodiment of the present invention.
FIG. 2 is a circuit diagram of a battery pack in accordance with another exemplary embodiment of the present invention.
FIG. 3 is a circuit diagram of a temperature monitoring circuit of the battery pack shown in FIG. 1.
FIG. 4 is a circuit diagram of a temperature monitoring circuit of the battery pack shown in FIG. 2.

### DETAILED DESCRIPTION OF THE PREFERRED EMBODIMENT

Hereinafter, exemplary embodiments of the present invention are described with reference to the drawings. However, the exemplary embodiments described below are illustrations of a battery pack to give a concrete form to technical ideas of the present invention, the present invention is not specifically limited to the battery pack described below. Furthermore, it should be appreciated that the members shown in claims are not specifically limited to members in the exemplary embodiments.

A battery pack of the present invention is detachably set to a portable device as a main body device, and supplies the main body device with supply power. The main body device to which a battery pack is set is a portable device such as a power tool. However, in the battery pack of the present invention, a main body device is not particularly limited to power tools and portable devices and may be any devices supplied with operation power from the battery pack.

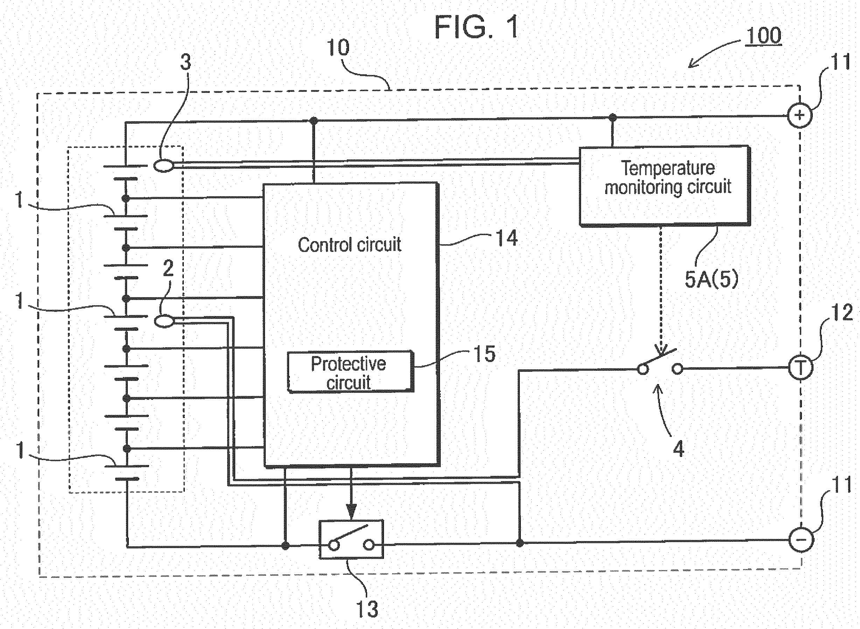

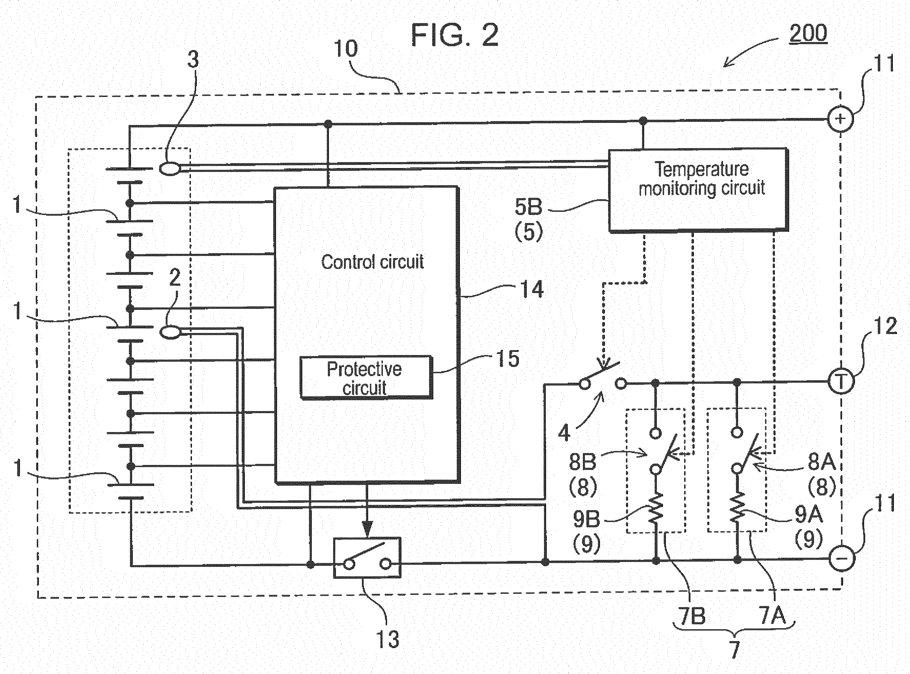

Battery packs 100 and 200 shown in circuit diagrams of FIGs. 1 and 2 include a plurality of batteries 1 housed in outer case 10. Battery packs 100 and 200 include main temperature sensor 2 that detects a battery temperature inside outer case 10. Furthermore, battery packs 100 and 200 include positive and negative power terminals 11 connected to the output sides of batteries 1, and temperature terminal 12 coupled to main temperature sensor 2. Power terminals 11 and temperature terminal 12 are provided to outer case 10 so as to be connected to power supply contacts and a temperature detection contact at the main body device side when battery packs 100 and 200 are set to the main body device. Power terminals 11 and temperature terminal 12 are fixed to outer case 10 and exposed to the outside, or fixed to a circuit board disposed inside outer case 10 and exposed to the outside from electrode windows provided to outer case 10.

In battery packs 100 and 200 shown in circuit diagrams of FIGs. 1 and 2, power terminals 11 are not directly connected to batteries 1, and one of power terminals 11 is coupled to one of the output terminals of batteries 1 via charge-discharge switch 13. In battery packs 100 and 200 shown in the drawings, charge-discharge switch 13 is connected between negative-side power terminal 11 and batteries 1. Charge-discharge switch 13 is a semiconductor switching element such as FET, and is turned ON and OFF by control of control circuit 14 including protective circuit 15 of batteries 1. Protective circuit 15 detects a voltage of each battery 1, and controls charge-discharge switch 13 such that voltages of all the batteries 1 are in a set range. Protective circuit 15 turns charge-discharge switch 13 to OFF when a voltage of the charged battery 1 exceeds the highest voltage, or when a voltage of the charged battery 1 is not more than the lowest voltage, thereby maintaining the voltage of battery 1 within a setting range to prevent battery 1 from being over-charged and over-discharged.

Main temperature sensor 2 is a thermistor. The thermistor detects a temperature when temperature is increased by reduction of electrical resistance value. The thermistor detects a temperature accurately because a change value of the electrical resistance value is large with respect to the temperature change. As main temperature sensor 2, any other elements whose temperature changes and an electrical resistance value is changed can be used. For example, a varistor can be used. Main temperature sensor 2 is disposed on the surface of battery 1 whose temperature becomes the highest in a usual state of battery packs 100 and 200 and detects a temperature of battery 1 in a thermal bonding manner. Main temperature sensor 2 can be also disposed at a position in the vicinity of the surface of battery 1 and detect a temperature of battery 1. Temperature terminal 12 is connected to a temperature detection contact of a main body device, and transmits the temperature of battery 1 detected by main temperature sensor 2 to the main body device. The main body device controls a charge-discharge electric current based on the temperature of battery 1 transmitted from temperature terminal 12 of battery packs 100 and 200 and protects batteries 1. Main temperature sensor 2 continues to carry out temperature detection and output of the detected temperature to temperature terminal 12 because temperatures of batteries 1 are necessary for charge-discharge control.

Battery packs 100 and 200 of FIGs. 1 and 2 include sub temperature sensor 3, in addition to main temperature sensor 2, inside outer case 10. Sub temperature sensor 3 is a temperature detector such as a thermistor similar to main temperature sensor 2. Sub temperature sensor 3 is disposed at a position different from that of main temperature sensor 2, and detects a temperature of battery 1 that is different from battery 1 whose temperature is detected by main temperature sensor 2, or detects a different portion in outer case 10. Sub temperature sensor 3 detects a temperature of battery 1 disposed at a position distant from main temperature sensor 2, or sub temperature sensor 3 is disposed at a position in which the temperature is likely to increase and detects a temperature inside outer case 10.

Sub temperature sensor 3 is not directly coupled to temperature terminal 12. In battery packs 100 and 200, main switch 4 that is turned ON and OFF depending on sub temperature sensor 3 is connected between main temperature sensor 2 and temperature terminal 12. Main switch 4 is turned ON and OFF depending on detected temperatures of sub temperature sensor 3. In order to switch main switch 4 ON and OFF, temperature monitoring circuit 5 for switching main switch 4 ON and OFF depending on the detected temperatures of sub temperature sensor 3 is provided.

Temperature monitoring circuit 5 includes a comparator for determining whether the detected temperature of sub temperature sensor 3 exceeds the upper threshold in the predetermined temperature range (for example, 0 to 80°C). Temperature monitoring circuit 5A of battery pack 100 shown in FIG. 1 compares the detected temperature of sub temperature sensor 3 with the upper threshold using the comparator. When the detected temperature becomes higher than the upper threshold, temperature monitoring circuit 5A determines that a state is in an abnormal temperature state, and turns main switch 4 OFF. The upper threshold with which the detected temperature is compared is set at an optimum temperature in the range of, for example, 70°C or more and 80°C or less. In sub temperature sensor 3, an electrical resistance value is changed depending on temperatures. Therefore, the comparator of temperature monitoring circuit 5A compares a voltage value varying depending on the electrical resistance value of sub temperature sensor 3 with the upper threshold, and determines whether the detected temperature is higher than the upper threshold.

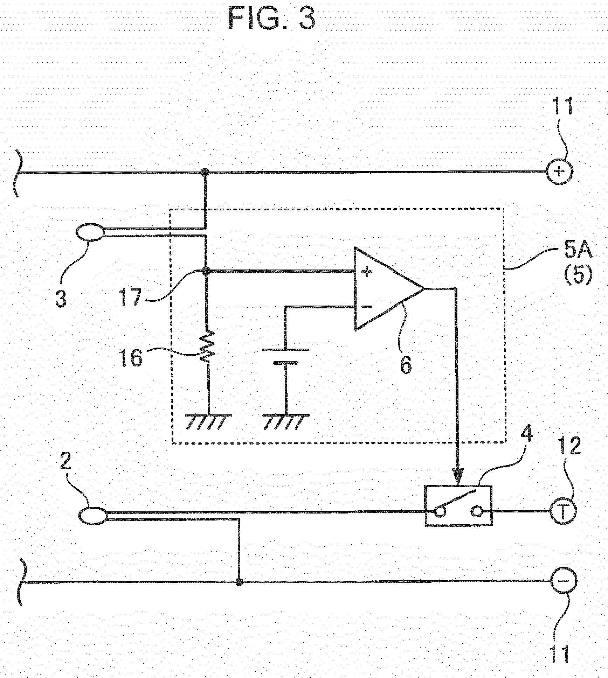

FIG. 3 shows a specific circuit diagram of temperature monitoring circuit 5A including comparator 6. Comparator 6 includes one input-side to which a reference voltage is input, and the other input-side to which a detected voltage varying depending on the detected temperatures of sub temperature sensor 3 is input. Comparator 6 compares the detected voltage with the reference voltage and detects that the detected temperature is higher than the upper threshold.

In comparator 6 of temperature monitoring circuit 5A of FIG. 3, a reference voltage is input to a negative-side input terminal, and a positive-side power line is connected to a positive-side input terminal via sub temperature sensor 3. Furthermore, input resistor 16 is connected between the positive-side input terminal and the negative-side earth line. That is to say, in temperature monitoring circuit 5A of FIG. 3, a series circuit of sub temperature sensor 3 and input resistor 16 is connected between the positive-side power line and the negative-side earth line, and connection point 17 between sub temperature sensor 3 and input resistor 16 is input to the positive-side input terminal of comparator 6. In this temperature monitoring circuit 5A, the reference voltage of comparator 6 is a voltage that is input when the detection temperature of sub temperature sensor 3 is the upper threshold, for example, for example, 80°C. When the detected temperature of sub temperature sensor 3 is lower than 80°C as the upper threshold, since the input detected voltage is lower than the reference voltage, comparator 6 outputs "Low." When the detected temperature is higher than 80°C, since the input detected voltage is higher than the reference voltage, comparator 6 outputs "High." Therefore, when comparator 6 determines that the detected temperature is higher than the upper threshold and in an abnormal temperature state, comparator 6 outputs an abnormal signal "High," and turns main switch 4 OFF.

Temperature monitoring circuit 5A mentioned above can compare the detected temperature with the upper threshold in real time. Temperature monitoring circuit 5 can also compare a digital signal, which is obtained by converting an electrical resistance value detected by sub temperature sensor 3 or an analog signal converted from the electrical resistance value into a voltage value, with the stored upper threshold, and determine whether or not the detected temperature is higher than the upper threshold.

In battery pack 100 of FIG. 1, when the detected temperature of sub temperature sensor 3 is higher than the upper threshold, temperature monitoring circuit 5A turns main switch 4 to an OFF state. In this state, main temperature sensor 2 is not coupled to temperature terminal 12, and the output impedance of temperature terminal 12 is higher than the electrical resistance value of main temperature sensor 2. On the other hand, when the detected temperature is not higher than upper threshold, since main switch 4 is kept in an ON state, main temperature sensor 2 is coupled to temperature terminal 12, and a signal of main temperature sensor 2 is transmitted from temperature terminal 12 to the main body device.

Battery pack 100 of FIG. 1 determines that a state in which the detected temperature of sub temperature sensor 3 is higher than the upper threshold of the predetermined temperature range is an abnormal temperature state and turns main switch 4 to an OFF state. Therefore, sub temperature sensor 3 can detect that the battery temperature is increased to an abnormal temperature, and the detected state is transmitted from temperature terminal 12 to main body device. The battery pack of the present invention can also determine that a state in which the detected temperature is lower than a lower threshold of the predetermined temperature range, which has been set at, for example, 0°C to 5°C, is an abnormal temperature state and turn main switch 4 to an OFF state. This battery pack transmits a state in which the battery temperature is abnormally low as an abnormal temperature state to the main body device.

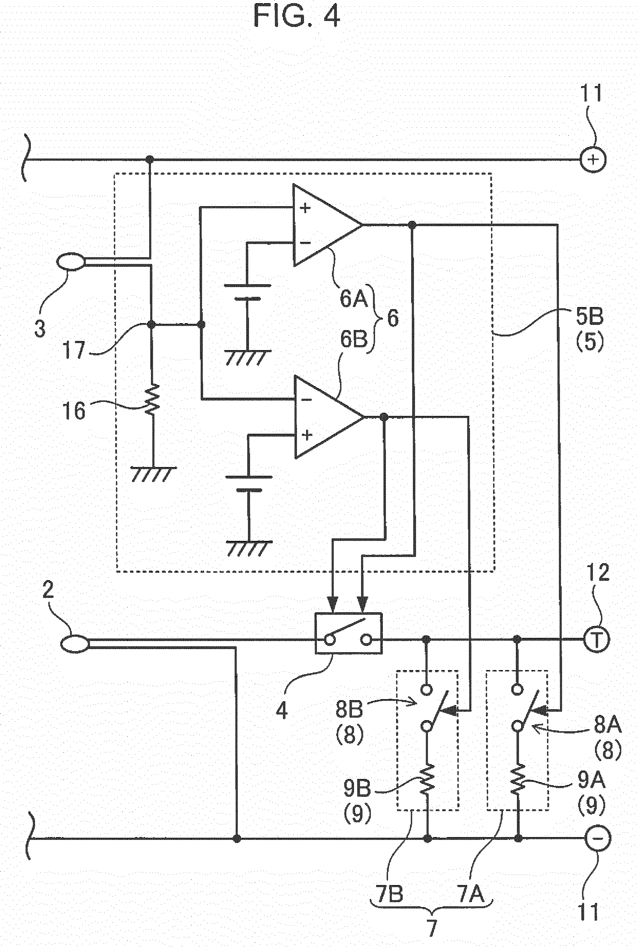

As shown in FIG. 4, temperature monitoring circuit 5B of FIG. 2 includes comparator 6 that determines whether the detected temperature of sub temperature sensor 3 is higher or lower than the predetermined temperature range. Temperature monitoring circuit 5B of this drawing includes first comparator 6A that compares the detected temperature with the upper threshold of the predetermined temperature range, and second comparator 6B that compares the detected temperature with the lower threshold of the predetermined temperature range. First comparator 6A sets the upper threshold to be compared with the detected temperature at, for example, 70°C to 80°C, and determines that a state in which the detected temperature of sub temperature sensor 3 is higher than the upper threshold is an abnormal temperature state and outputs an abnormal signal. Second comparator 6B sets the lower threshold to be compared with the detected temperature at, for example, 0°C to 5°C, and determines that a state in which the detected temperature of sub temperature sensor 3 is lower than the lower threshold is an abnormal temperature state and outputs an abnormal signal.

FIG. 4 shows temperature monitoring circuit 5B including two comparators 6. Comparator 6 of this drawing is a differential amplifier in which a reference voltage is input into one input-side. In comparator 6, the detected voltage varying depending on the detected temperature of sub temperature sensor 3 is input to the other input-side. Comparator 6 compares the detected voltage with the reference voltage, turns the output into "Low" and "High," and outputs an abnormal signal. In temperature monitoring circuit 5B of FIG. 4, a series circuit of sub temperature sensor 3 and input resistor 16, which are connected in series each other, is connected between the positive-side power line and the negative-side earth line. Connection point 17 between sub temperature sensor 3 and input resistor 16 is connected to the other input-side of comparator 6, and the detected voltage varying depending on the detected temperature of sub temperature sensor 3 is input into comparator 6.

In first comparator 6A, a reference voltage is input to the negative-side input terminal, and connection point 17 between sub temperature sensor 3 and input resistor 16 is connected and a detected voltage is input to the positive-side input terminal. In this temperature monitoring circuit 5B, the reference voltage of first comparator 6A is a voltage that is input when the detection temperature of sub temperature sensor 3 is the upper threshold, for example, 80°C. When the detected temperature of sub temperature sensor 3 is lower than 80°C as the upper threshold, since the input detected voltage is lower than the reference voltage, first comparator 6A outputs "Low." When the detected temperature is higher than 80°C, since the input detected voltage is higher than the reference voltage, first comparator 6A outputs "High." Therefore, when first comparator 6A outputs an abnormal signal "High" and turns main switch 4 OFF.

In second comparator 6B, to the positive-side input terminal, a reference voltage is input, and to the negative-side input terminal, connection point 17 between sub temperature sensor 3 and input resistor 16 is connected and the detected voltage is input. In this temperature monitoring circuit 5B, the reference voltage of second comparator 6B is a voltage that is input when the detection temperature of sub temperature sensor 3 is the lower threshold, for example, 0°C. When the detected temperature of sub temperature sensor 3 is higher than 0°C as the lower threshold, since the input detected voltage is higher than the reference voltage, second comparator 6B outputs "Low." When the detected temperature is lower than 0°C, the input detected voltage is lower than the reference voltage, and second comparator 6B outputs "High." Therefore, when second comparator 6B outputs an abnormal signal "High" and turns main switch 4 OFF.

Temperature monitoring circuit 5B mentioned above also can compare the detected temperature with the threshold in the predetermined temperature range in real time. Temperature monitoring circuit 5 can also compare a digital signal, which is obtained by converting an electrical resistance value detected by sub temperature sensor 3 or an analog signal converted from the electrical resistance value into a voltage value, with the stored upper threshold, and determine whether or not the detected temperature is higher than the upper threshold, or the detected temperature is lower than the lower threshold.

Temperature monitoring circuit 5B compares the detected temperature of sub temperature sensor 3 with the threshold, outputs an abnormal signal when the detected temperature exceeds the threshold in the predetermined temperature range, turns main switch 4 from ON to OFF, and disconnects main temperature sensor 2 from temperature terminal 12. Therefore, when the detected temperature of sub temperature sensor 3 is higher than the upper threshold, or lower than the lower threshold, that is, when the detected temperature exceeds the predetermined temperature range, a temperature signal of main temperature sensor 2 is not output to temperature terminal 12. When main switch 4 is in an OFF state, and output impedance of temperature terminal 12 is changed, a main body device determines that the detected temperature of sub temperature sensor 3 exceeds the threshold of the predetermined temperature range.

Battery pack 200 of FIG. 2 includes resistor circuit 7 controlled by temperature monitoring circuit 5B so that an output impedance of temperature terminal 12 is a specific electrical resistance value when the detected temperature of sub temperature sensor 3 exceeds the threshold of a predetermined temperature range. Resistor circuit 7 is a series circuit of sub-switch 8 and resistor 9. A first end of resistor circuit 7 is connected between temperature terminal 12 and main switch 4. A second end of resistor circuit 7 shown in FIG. 2 is connected to one of power terminals 11 (negative-side power terminal in the drawing). That is to say, resistor circuit 7 is connected between temperature terminal 12 and one of the power terminals 11. Sub-switch 8 of resistor circuit 7 is turned ON in an OFF state of main switch 4, and the output impedance of temperature terminal 12 is an electrical resistance value of resistor 9.

Battery pack 200 shown in FIGs. 2 and 4 includes two resistor circuits 7 controlled by two comparators 6 of temperature monitoring circuit 5B. Resistors 9 of two resistor circuits 7 have different electrical resistance values from that of main temperature sensor 2. Exactly, since the electrical resistance value of main temperature sensor 2 varies depending on the detected temperature, the electrical resistance value of resistor 9 is a resistance value out of the range of possible electrical resistance values taken by main temperature sensor 2 depending on a temperature change. That is to say, the electrical resistance value of resistor 9 is set to smaller than the minimum electrical resistance value or larger than the maximum electrical resistance value of the values, varying within the predetermined temperature range, of main temperature sensor 2. This is because in an abnormal temperature state in which the detected temperature of sub temperature sensor 3 exceeds the thresholds in a predetermined temperature range, when main switch 4 is turned OFF and sub-switch 8 is turned ON, the output impedance of temperature terminal 12, which is an electrical resistance value different from the electrical resistance value of main temperature sensor 2, is transmitted as an abnormal temperature state to the main body device.

Sub-switch 8 of resistor circuit 7 is controlled by temperature monitoring circuit 5B. When the detected temperature of sub temperature sensor 3 exceeds the threshold in a predetermined temperature range, temperature monitoring circuit 5B turns main switch 4 OFF and turns one of sub-switches 8 ON, and an output impedance of temperature terminal 12 is an electrical resistance value of resistor 9 of resistor circuit 7 which has been turned to an ON state.

In battery pack 200 of FIGs. 2 and 4, two resistor circuits 7, that is, first resistor circuit 7A and second resistor circuit 7B, having different electrical resistance values of resistors 9, are connected in parallel. First and second resistor circuits 7A and 7B are coupled to temperature terminal 12 and one of power terminals 11. First comparator 6A performs control so that first sub-switch 8A of first resistor circuit 7A is turned ON and OFF; and second comparator 6B performs control so that second sub-switch 8B of second resistor circuit 7B is turned ON and OFF. Furthermore, the electrical resistance values of first resistor 9A of first resistor circuit 7A and second resistor 9B of second resistor circuit 7B are resistance values out of the range of possible electrical resistance values taken by main temperature sensor 2 by a temperature change. Electrical resistances of first resistor 9A and second resistor 9B are different values. For example, the electrical resistance value of first resistor 9A is set at a larger value than the varying maximum electrical resistance value of main temperature sensor 2, and the electrical resistance value of second resistor 9B is set at a smaller value than the varying minimum electrical resistance values of main temperature sensor 2.

First comparator 6A of temperature monitoring circuit 5B compares the detected temperature of sub temperature sensor 3 with the upper threshold in the predetermined temperature range, and when the detected temperature is higher than the upper threshold, outputs an abnormal signal and turns main switch 4 to an OFF state and first sub-switch 8A to an ON state. In this state, the output impedance of temperature terminal 12 is an electrical resistance value of first resistor 9A.

Second comparator 6B of temperature monitoring circuit 5B compares the detected temperature of sub temperature sensor 3 with the lower threshold in the predetermined temperature range, and when the detected temperature is lower than the lower threshold, outputs an abnormal signal and turns main switch 4 to an OFF state and second sub-switch 8B to an ON state. In this state, the output impedance of temperature terminal 12 is an electrical resistance value of second resistor 9B.

The main body device determines that the detected temperature of sub temperature sensor 3 is higher than the upper threshold when the output impedance of temperature terminal 12 is an electrical resistance value of first resistor 9A, and determines that the detected temperature of sub temperature sensor 3 is lower than the lower threshold when the output impedance of temperature terminal 12 is an electrical resistance value of second resistor 9B.

In battery pack 200 of FIG. 2, temperature monitoring circuit 5B turns sub-switches 8 of two resistor circuits 7 ON and OFF to change the output impedance of temperature terminal 12, and transmits an abnormal temperature state to the main body device. Although not shown, the battery pack may be provided with three or more resistor circuits, perform control so that a sub-switch of each of the resistor circuits is tuned ON and OFF, and transmit three or more abnormal signals to the main body device. This battery pack has three or more thresholds for comparing the detected temperature of sub temperature sensor, and can transmit signals to main body device, indicating that any of the detected temperatures exceeds the threshold. The battery pack can set, for example, a lower threshold at 0°C, a high-temperature threshold at 70°C, an upper threshold at 80°C, and transmit any one of the abnormal temperature states, that is, the detected temperature of sub temperature sensor 3 of 0°C or less, 70°C or more, and 80°C or more, to the main body device.

Note here that in the exemplary embodiment, sub temperature sensor 3 detects a temperature of battery 1 that is other than battery 1 whose temperature is detected by main temperature sensor 2, but may detect temperatures of circuit components such as charge-discharge switch 13 and protective circuit 15 mounted on the circuit board. At this time, by comparing the detected temperature of sub temperature sensor 3 with the threshold in the predetermined temperature range corresponding to the circuit components, an abnormal temperature state of the circuit components can be transmitted to a main body device.

Note here that in the exemplary embodiment, one sub temperature sensor 3 is disposed, but a plurality of sub temperature sensors 3 may be disposed. In this case, temperature monitoring circuit 5 can compare a plurality of detected temperatures detected by the plurality of sub temperature sensors 3 with the predetermined temperature range, perform control so that main switch 4 is turned OFF when any one of the plurality of detected temperatures is higher or lower than the predetermined temperature range, and can transmit an abnormal signal from temperature terminal 12 to the main body device.

Note here that in the exemplary embodiment, one sub temperature sensor 3 is disposed, but a plurality of sub temperature sensors 3 may be disposed. In this case, one to a plurality of resistor circuits 7 can be disposed corresponding to each of the plurality of sub temperature sensors 3. These resistor circuits 7 are disposed between temperature terminal 12 and main switch 4 at a first end, and connected to one of power terminals 11 at a second end. At this time, when the electrical resistance values of resistor 9 of resistor circuit 7 are different values for each sub temperature sensor 3, any one of the sub temperature sensors 3 can transmit an abnormal temperature state to the main body device.

### INDUSTRIAL APPLICABILITY

The present invention can be safely used for a battery pack by transmitting an abnormal temperature to a main body device with a simple circuit structure.

### REFERENCE MARKS IN THE DRAWINGS

- 100, 200: battery pack
- 1: battery
- 2: main temperature sensor
- 3: sub temperature sensor
- 4: main switch
- 5, 5A, 5B: temperature monitoring circuit
- 6...: comparator
- 6A: first comparator
- 6B: second comparator
- 7: resistor circuit
- 7A: first resistor circuit
- 7B: second resistor circuit
- 8: sub-switch
- 8A: first sub-switch
- 8B: second sub-switch
- 9: resistor
- 9A: first resistor
- 9B: second resistor
- 10: outer case
- 11: power terminal
- 12: temperature terminal
- 13: charge-discharge switch
- 14: control circuit
- 15: protective circuit
- 16: input resistor
- 17: connection point

## Claims

1. A battery pack including a plurality of batteries, the battery pack comprising:
a main temperature sensor (2) that detects a temperature of the batteries;
a temperature terminal (12) coupled to the main temperature sensor (2);
a sub temperature sensor (3) that detects a temperature of the battery pack, at a position different from a position of the main temperature sensor (2), and **characterized in** comprising
a main switch (4) connected between the main temperature sensor (2) and the temperature terminal (12), and, in an ON state, outputting a signal of the main temperature sensor (2) to the temperature terminal (12), and, in an OFF state, disconnecting the main temperature sensor (2) from the temperature terminal (12); and
a temperature monitoring circuit (5) that performs control so that the main switch (1) is turned ON and OFF depending on a detected temperature of the sub temperature sensor (3),
wherein the temperature monitoring circuit (5) compares the detected temperature detected by the sub temperature sensor (3) with a predetermined temperature range, performs control so that the main switch (4) is turned to an OFF state when the detected temperature is higher or lower than the predetermined temperature range, and outputs an abnormal signal from the temperature terminal (12).

2. The battery pack according to claim 1, further comprising: a resistor circuit (7) having a first end connected between the temperature terminal (12) and the main switch (4),
wherein
the resistor circuit (7) includes a sub-switch (8) and a resistor (9), and the resistor (9) has a resistance value out of a range of possible resistance values taken by the main temperature sensor (2) depending on a temperature change, and,
in an OFF state of the main switch (4), the temperature monitoring circuit (5) turns the sub-switch (8) of the resistor circuit (7) to an ON state, and an output signal of the temperature terminal (12) is the resistance value of the resistor (9).

3. The battery pack according to claim 2, wherein the battery pack comprises the resistor circuit (7) which includes a first resistor circuit (7A) and a second resistor circuit (7B) having different resistance values of resistors (9A, 9B) and each having a sub-switch (8A, 8B);
wherein, in an OFF state of the main switch (4), the temperature monitoring circuit (5) turns the sub-switch (8A, 8B) of any one of the first resistor circuit (7A) and the second resistor circuit (7B) to an ON state, and an output signal of the temperature terminal (12) is the resistance value of the resistor (9A, 9B) of the first or second resistor circuit (7A, 7B) that has been turned to the ON state.

4. The battery pack according to claim 3, wherein the temperature monitoring circuit (5) compares the detected temperature of the sub temperature sensor (3) with the predetermined temperature range, turns the main switch (4) to an OFF state and the sub-switch (8A) of the first resistor circuit (7A) to an ON state when the detected temperature is higher than the predetermined temperature range; turns the main switch (4) to an OFF state and the sub-switch (8B) of the second resistor circuit (7B) to an ON state when the detected temperature is lower than the predetermined temperature range; and outputs the output signal from the temperature terminal (12), indicating that the detected temperature of the sub temperature sensor is higher or lower than the predetermined temperature range, by changing the output signal of the temperature terminal (12).

5. The battery pack according to any one of claims 1 to 4,
wherein the battery pack comprises a plurality of the sub temperature sensors (3); and
wherein the temperature monitoring circuit (5) compares a plurality of detected temperatures detected by the plurality of sub temperature sensors (3) with the predetermined temperature range; performs control so that the main switch (4) is turned to an OFF state when any one of the plurality of detected temperatures is higher or lower than the predetermined temperature range, and outputs an abnormal signal from the temperature terminal (12).

6. The battery pack according to any one of claims 2 to 4, wherein the battery pack comprises a plurality of the sub temperature sensors (3) and a plurality of the resistor circuits (7), and the plurality of resistor circuits (7) include resistors (9) having different resistance values for each of the connected sub temperature sensors (3).

7. The battery pack according to any one of claims 1 to 6, wherein the temperature monitoring circuit (5) includes a comparator (6), and the comparator (6) compares a detected voltage input from the sub temperature sensor (3) with a reference voltage, and compares the detected temperature with the predetermined temperature range.

8. The battery pack according to any one of claims 1 to 7, wherein the main temperature sensor (2) detects a temperature of one of the batteries (1), having a highest temperature among the plurality of batteries (1) in a usual state, and
the sub temperature sensor (3) detects a temperature of another of the batteries (1) that is distant from the main temperature sensor (2).

9. The battery pack according to any one of claims 1 to 7, wherein the sub temperature sensor (3) detects a temperature of a circuit component.

## Patentansprüche

1. Batteriepack mit mehreren Batterien, wobei der Batteriepack aufweist:
einen Haupttemperatursensor (2), der eine Temperatur der Batterien erfasst;
einen Temperaturanschluss (12), der mit dem Haupttemperatursensor (2) verbunden ist;
einen Nebentemperatursensor (3), der eine Temperatur des Batteriepacks an einer Position erfasst, die sich von einer Position des Haupttemperatursensors (2) unterscheidet,
**gekennzeichnet durch**
einen Hauptschalter (4), der zwischen dem Haupttemperatursensor (2) und dem Temperaturanschluss (12) angeschlossen ist und in einem EIN-Zustand ein Signal des Haupttemperatursensors (2) an den Temperaturanschluss (12) ausgibt und in einem AUS-Zustand den Haupttemperatursensor (2) von dem Temperaturanschluss (12) entkoppelt; und
eine Temperaturüberwachungsschaltung (5), die eine Steuerung derart ausführt, dass der Hauptschalter (1) eingeschaltet und ausgeschaltet wird in Abhängigkeit einer erfassten Temperatur des Nebentemperatursensors (3),
wobei die Temperaturüberwachungsschaltung (5) die erfasste Temperatur, die von dem Nebentemperatursensor (3) erfasst ist, mit einem vorbestimmten Temperaturbereich vergleicht, eine Steuerung derart ausführt, dass der Hauptschalter (4) in einen AUS-Zustand geschaltet wird, wenn die erfasste Temperatur höher oder niedriger als der vorbestimmte Temperaturbereich ist, und ein Abweichungssignal aus dem Temperaturanschluss (12) ausgibt.

2. Batteriepack nach Anspruch 1, der ferner aufweist: eine Widerstandsschaltung (7) mit einem ersten Ende, das zwischen dem Temperaturanschluss (12) und dem Hauptschalter (4) angeschlossen ist,
wobei
die Widerstandsschaltung (7) einen Nebenschalter (8) und einen Widerstand (9) aufweist und der Widerstand (9) einen Widerstandswert aus einem Bereich möglicher Widerstandswerte hat, die von dem Haupttemperatursensor (2) in Abhängigkeit von einer Temperaturänderung angenommen werden, und
in einem AUS-Zustand des Hauptschalters (4) die Temperaturüberwachungsschaltung (5) den Nebenschalter (8) der Widerstandsschaltung (7) in einen EIN-Zustand schaltet,
und ein Ausgangssignal des Temperaturanschlusses (12) der Widerstandswert des Widerstands (9) ist.

3. Batteriepack nach Anspruch 2, wobei der Batteriepack die Widerstandsschaltung (7) aufweist, die jeweils eine erste Widerstandsschaltung (7A) und eine zweite Widerstandsschaltung (7B) mit unterschiedlichen Widerstandswerten für Widerstände (9A, 9B) aufweisen, und die jeweils einen Nebenschalter (8A, 8B) aufweisen,
wobei in einem AUS-Zustand des Hauptschalters (4) die Temperaturüberwachungsschaltung (5) den Nebenschalter (8A, 8B) der ersten Widerstandsschaltung (7A) oder der zweiten Widerstandsschaltung (7B) in einen EIN-Zustand schaltet, und ein Ausgangssignal des Temperaturanschlusses (12) der Widerstandswert des Widerstands (9A, 9B) der ersten oder der zweiten Widerstandsschaltung (7A, 7B) ist, die in den EIN-Zustand geschaltet worden ist.

4. Batteriepack nach Anspruch 3, wobei die Temperaturüberwachungsschaltung (5) die erfasste Temperatur des Nebentemperatursensors (3) mit dem vorbestimmten Temperaturbereich vergleicht, den Hauptschalter (4) in einen AUS-Zustand und den Nebenschalter (8A) der ersten Widerstandsschaltung (7A) in einen EIN-Zustand schaltet, wenn die erfasste Temperatur höher als der vorbestimmte Temperaturbereich ist;
den Hauptschalter (4) in einen AUS-Zustand und den Nebenschalter (8B) der zweiten Widerstandsschaltung (7B) in einen EIN-Zustand schaltet, wenn die erfasste Temperatur niedriger als der vorbestimmte Temperaturbereich ist; und
das Ausgangssignal aus dem Temperaturanschluss (12) ausgibt, das anzeigt, dass die erfasste Temperatur des Nebentemperatursensors höher oder niedriger als der vorbestimmte Temperaturbereich ist, indem das Ausgangssignal des Temperaturanschlusses (12) geändert wird.

5. Batteriepack nach einem der Ansprüche 1 bis 4,
wobei der Batteriepack mehrere Nebentemperatursensoren (3) aufweist, und
wobei die Temperaturüberwachungsschaltung (5) mehrere erfasste Temperaturen, die von den mehreren Nebentemperatursensoren (3) erfasst werden, mit dem vorbestimmten Temperaturbereich vergleicht; eine Steuerung so ausführt, dass der Hauptschalter (4) in einen AUS-Zustand geschaltet wird, wenn eine der mehreren erfassten Temperaturen höher oder niedriger als der vorbestimmte Temperaturbereich ist, und ein Abweichungssignal aus dem Temperaturanschluss (12) ausgibt.

6. Batteriepack nach einem der Ansprüche 2 bis 4, wobei der Batteriepack mehrere der Nebentemperatursensoren (3) und mehrere der Widerstandsschaltungen (7) aufweist, und die mehreren Widerstandsschaltungen (7) Widerstände (9) mit unterschiedlichen Widerstandswerten für jeden der angeschlossenen Nebentemperatursensoren (3) aufweisen.

7. Batteriepack nach einem der Ansprüche 1 bis 6, wobei die Temperaturüberwachungsschaltung (5) einen Komparator (6) aufweist, und der Komparator (6) eine von dem Nebentemperatursensor (3) eingespeiste erfasste Spannung mit einer Referenzspannung vergleicht, und die erfasste Temperatur mit dem vorbestimmten Temperaturbereich vergleicht.

8. Batteriepack nach einem der Ansprüche 1 bis 7, wobei der Haupttemperatursensor (2) eine Temperatur einer der Batterien (1), die die höchste Temperatur der mehreren Batterien (1) im Verwendungszustand hat, erfasst, und
der Nebentemperatursensor (3) eine Temperatur einer weiteren der Batterien (1) erfasst, die von dem Haupttemperatursensor (2) entfernt ist.

9. Batteriepack nach einem der Ansprüche 1 bis 7, wobei der Nebentemperatursensor (3) eine Temperatur einer Schaltungskomponente erfasst.

## Revendications

1. Bloc-batterie incluant une pluralité de batteries, le bloc-batterie comprenant :
un capteur de température principal (2) qui détecte la température des batteries,
une borne de température (12) couplée au capteur de température principal (2),
un capteur de température auxiliaire (3) qui détecte la température du bloc-batterie à une position différente de la position du capteur de température principal (2), et **caractérisé en ce qu'**il comprend :
un interrupteur principal (4) relié entre le capteur de température principal (2) et la borne de température (12), et, à l'état conducteur, délivrant un signal provenant du capteur de température principal (2) à la borne de température (12), et, à l'état bloqué, déconnectant le capteur de température principal (2) de la borne de température (12), et
un circuit de surveillance de température (5) qui effectue une commande telle que l'interrupteur principal (4) est basculé à l'état conducteur et bloqué en fonction de la température détectée du capteur de température auxiliaire (3),
dans lequel le circuit de surveillance de température (5) compare la température détectée par le capteur de température auxiliaire (3) à une plage de températures prédéterminée, effectue une commande telle que l'interrupteur principal (4) est basculé à l'état bloqué lorsque la température détectée est supérieure ou inférieure à la plage de températures prédéterminée, et délivre en sortie un signal d'anomalie à partir de la borne de température (12).

2. Bloc-batterie selon la revendication 1, comprenant en outre un circuit de résistance (7) dont une première terminaison est reliée entre la borne de température (12) et l'interrupteur principal (4),
dans lequel
le circuit de résistance (7) inclut un interrupteur auxiliaire (8) et une résistance (9), et la résistance (9) présente une valeur ohmique en dehors de la plage de valeurs ohmiques possibles prises par le capteur de température principal (2) en fonction d'un changement de température, et
à l'état bloqué de l'interrupteur principal (4), le circuit de surveillance de température (5) rend conducteur l'interrupteur auxiliaire (8) du circuit de résistance (7) et le signal de sortie de la borne de température (12) représente la valeur ohmique de la résistance (9).

3. Bloc-batterie selon la revendication 2, le bloc-batterie comprenant le circuit de résistance (7) qui inclut un premier circuit de résistance (7A) et un second circuit de résistance (7B) présentant des valeurs ohmiques différentes pour les résistances (9A, 9B) et possédant chacun un interrupteur auxiliaire (8A, 8B),
dans lequel, à l'état bloqué de l'interrupteur principal (4), le circuit de surveillance de température (5) rend conducteur l'interrupteur auxiliaire (8A, 8B) de l'un quelconque du premier circuit de résistance (7A) et du second circuit de résistance (7B), et le signal de sortie de la borne de température (12) représente la valeur ohmique de la résistance (9A, 9B) du premier ou du second circuit de résistance (7A, 7B) qui a été basculé à l'état conducteur.

4. Bloc-batterie selon la revendication 3, dans lequel le circuit de surveillance de température (5) compare la température détectée du capteur de température auxiliaire (3) à la plage de températures prédéterminée, bascule l'interrupteur principal (4) à l'état bloqué et l'interrupteur auxiliaire (8A) du premier circuit de résistance (7A) à l'état conducteur lorsque la température détectée est supérieure à la plage de températures prédéterminée ; il bascule l'interrupteur principal (4) à l'état bloqué et l'interrupteur auxiliaire (8B) du second circuit de résistance (7B) à l'état conducteur lorsque la température détectée est inférieure à la plage de températures prédéterminée ; et il délivre en sortie le signal provenant de la borne de température (12) indiquant que la température détectée du capteur de température auxiliaire est supérieure ou inférieure à la plage de températures prédéterminée en modifiant le signal de sortie de la borne de température (12).

5. Bloc-batterie selon l'une quelconque des revendications 1 à 4,
le bloc-batterie comprenant une pluralité de capteurs de température auxiliaires (3), et
dans lequel le circuit de surveillance de température (5) compare une pluralité de températures détectées par la pluralité de capteurs de température auxiliaires (3) à la plage de températures prédéterminée ; effectue une commande telle que l'interrupteur principal (4) est basculé à l'état bloqué lorsque l'une quelconque de la pluralité de températures détectées est supérieure ou inférieure à la plage de températures prédéterminée et délivre en sortie un signal d'anomalie à partir de la borne de température (12).

6. Bloc-batterie selon l'une quelconque des revendications 2 à 4, le bloc-batterie comprenant une pluralité de capteurs de température auxiliaires (3) et une pluralité de circuits de résistance (7), et la pluralité de circuits de résistance (7) inclut des résistances (9) présentant des valeurs ohmiques différentes pour chacun des capteurs de température auxiliaires connectés.

7. Bloc-batterie selon l'une quelconque des revendications 1 à 6, dans lequel le circuit de surveillance de température (5) inclut un comparateur (6), et le comparateur (6) compare une tension détectée provenant du capteur de température auxiliaire (3) à une tension de référence et compare la température détectée à la plage de températures prédéterminée.

8. Bloc-batterie selon l'une quelconque des revendications 1 à 7, dans lequel le capteur de température principal (2) détecte la température de l'une des batteries (1) présentant la température la plus élevée parmi la pluralité de batteries (1) à l'état usuel, et
le capteur de température auxiliaire (3) détecte la température d'une autre des batteries (1) qui se trouve à distance du capteur de température principal (2).

9. Bloc-batterie selon l'une quelconque des revendications 1 à 7, dans lequel le capteur de température auxiliaire (3) détecte la température d'un composant de circuit.
